# EUROPEAN PATENT APPLICATION

(11) **EP 4 571 484 A1**
(43) Date of publication of application: **18.06.2025**
(21) Application number: 25173034.7
(22) Date of filing: 28.04.2025
(51) Int. Cl.: G06F 3/14, G09G 5/12

(54) **IMAGE PROCESSING METHOD, APPARATUS, ELECTRONIC DEVICE, MEDIUM, AND DISPLAY APPARATUS**

(30) Priority: 22.10.2024 CN 202411482043
(71) Applicant: XG TECH PTE. LTD., Singapore 179098 (SG)
(72) Inventor: ZHANG, Zhiqun, 179098 Singapore (SG); YU, Jianfeng, 179098 Singapore (SG)
(74) Representative: V.O.

(57) **Abstract**

Embodiments of the present disclosure disclose an image processing method, an apparatus, an electronic device, a medium, and a display apparatus, wherein the image processing apparatus includes at least one input module, configured for acquiring an image signal to be displayed; an image processing module, configured for determining a quantity of output modules, and determining each of sub-image signals to be displayed corresponding to the image signal to be displayed based on the quantity of output modules; a synchronization module, configured for determining synchronization signals corresponding to the respective sub-image signals to be displayed; and a plurality of output modules, configured for respectively sending each of the sub-image signals to be displayed to the display terminal based on the synchronization signal.

## Description

### FIELD OF THE PRESENT DISCLOSURE

The present disclosure relates to the technical field of displaying, and more particularly, to an image processing method, an apparatus, an electronic device, a medium, and a display apparatus.

### BACKGROUND OF THE PRESENT DISCLOSURE

To provide the consumer with a more comfortable viewing experience, ultra-wide displays have emerged. For example, in smart cockpit display systems, where there are ultra-wide display screens with display widths in excess of 4096 or 8192 pixels. However, due to the limited chip cost and other factors, the display width supported by the chip driving the display screen is limited, which leads to image distortion, incomplete display or performance degradation when displaying content on the ultra-wide display screen, thereby limiting the expansion of the width of the ultra-wide display screen.

Therefore, how to meet the display requirements of ultra-wide display screen has become an urgent technical problem to be solved to promote the application of ultra-wide display screen.

### SUMMARY OF THE PRESENT DISCLOSURE

Embodiments of the present disclosure provide an image processing method, an apparatus, an electronic device, a medium, and a display apparatus.

According to an aspect of an embodiment of the present disclosure, an image processing apparatus is provided, including at least one input module, an image processing module, a synchronization module, and a plurality of output modules; each of input modules is configured for acquiring an image signal to be displayed; the image processing module is configured for determining a quantity of output modules, and determining respective sub-image signals to be displayed corresponding to the image signal to be displayed based on the quantity of output modules; the synchronization module is configured for determining a synchronization signal corresponding to the respective sub-image signals to be displayed; and the plurality of output modules are configured for respectively sending each of the sub-image signals to be displayed to the display terminal based on the synchronization signal.

According to another aspect of an embodiment of the present disclosure, a display apparatus is provided, including a display terminal and an image processing apparatus as described above; the display terminal includes a plurality of time sequence controllers and a display screen; wherein the quantity of time sequence controllers is the same as the quantity of output modules in the image processing apparatus; and each of the time sequence controllers of the display terminal is configured for acquiring a sub-image signal to be displayed, and for driving the display screen to display the sub-image signal to be displayed.

According to another aspect of an embodiment of the present disclosure, an image processing method is provided, including acquiring an image signal to be displayed by at least one input module; determining a quantity of output modules by an image processing module, and determining respective sub-image signals to be displayed corresponding to the image signal to be displayed based on the quantity of the output modules; determining by a synchronization module a synchronization signal corresponding to the respective sub-image signals to be displayed; and respectively sending by a plurality of the output modules each of the sub-image signals to be displayed to a display terminal based on the synchronization signal.

According to another aspect of an embodiment of the present disclosure, a computer-readable storage medium is provided, storing a computer program thereon, which, when executed by a processor, cause the processor to perform the above-described image processing method.

According to another aspect of an embodiment of the present disclosure, an electronic device is provided, including: a processor; a memory configured for storing processor-executable instructions; wherein the processor is configured for reading executable instructions from the memory and executing the instructions to implement the image processing method described above.

According to the image processing method, the apparatus, the electronic device, the storage medium and the display apparatus provided by the above-mentioned embodiments of the present disclosure, the image processing apparatus includes at least one input module, an image processing module, a synchronization module, and a plurality of output modules; each of input modules is configured for acquiring an image signal to be displayed; the image processing module is configured for determining a quantity of output modules, and determining respective sub-image signals to be displayed corresponding to the image signal to be displayed based on the quantity of the output modules; the synchronization module is configured for determining a synchronization signal corresponding to the respective sub-image signals to be displayed; and the plurality of output modules are configured for respectively sending each of the sub-image signals to be displayed to the display terminal based on the synchronization signal. Thus, the present disclosure can achieve the effect of displaying an image signal to be displayed via an ultra-wide display screen by dividing the image signals to be displayed and by respectively and synchronously displaying a plurality of sub-image signals to be displayed obtained by dividing in different display sub-areas of a display terminal via a plurality of synchronization signals. Moreover, the cost of the display terminal is reduced without adding any hardware adjustments.

The embodiments of the present disclosure will now be described in further detail with reference to the accompanying drawings and embodiments.

### BRIEF DESCRIPTION OF THE DRAWINGS

Fig. 1 is a diagram of a display system to which the present disclosure is applicable.
Fig. 2 is a schematic diagram of an image processing apparatus according to an exemplary embodiment of the present disclosure.
Fig. 3 is a structurally schematic view of a display apparatus according to an exemplary embodiment of the present disclosure.
Fig. 4 is a schematic flow diagram of an image processing method according to another exemplary embodiment of the present disclosure.
Fig. 5 is a structure diagram of an electronic device according to an exemplary embodiment of the present disclosure.

### DESCRIPTION OF THE EMBODIMENTS

Hereinafter, exemplary embodiments according to the present disclosure will be described in detail with reference to the accompanying drawings. Obviously, the described embodiments are merely a few of the embodiments of the present disclosure, rather than all of the embodiments of the present disclosure. It should be understood that the present disclosure is not to be limited to the exemplary embodiments described herein.

It should be noted that the relative arrangement of parts and steps, numerical expressions and numerical values set forth in these examples do not limit the scope of the present disclosure unless specifically stated otherwise.

### Overviews of the present disclosure

In smart cockpit display systems and other liquid crystal display systems, there is an ultra-wide display screen with a display width exceeding 4096 or 8192 pixels. However, the display width supported by the chip driving the display screen is limited. For example, the display width of less than 4096 pixels can only be supported, resulting in image distortion, incomplete display or performance degradation when displaying content on the ultra-wide display screen, which limits the expansion of the width of the ultra-wide display screen.

It should be understood that reference to an ultra-wide display screen in this disclosure refers to a display screen having a screen display width that exceeds the display width supported by a time sequence controller.

The technical solution of the present disclosure is to provide an image processing apparatus in a System on Chip (SOC) system, wherein an image processing module in the image processing apparatus divides an image signal to be displayed on an ultra-wide display screen into a plurality of sub-image signals to be displayed. A plurality of output modules respectively and synchronously send the plurality of sub-image signals to a display terminal based on a plurality of synchronization signals so that the plurality of sub-image signals to be displayed are respectively and synchronously displayed in different display sub-areas of the display terminal. The plurality of display sub-areas constitute a complete display area. Thus, the complete image signal to be displayed can be displayed by the ultra-wide display screen.

### Exemplary system

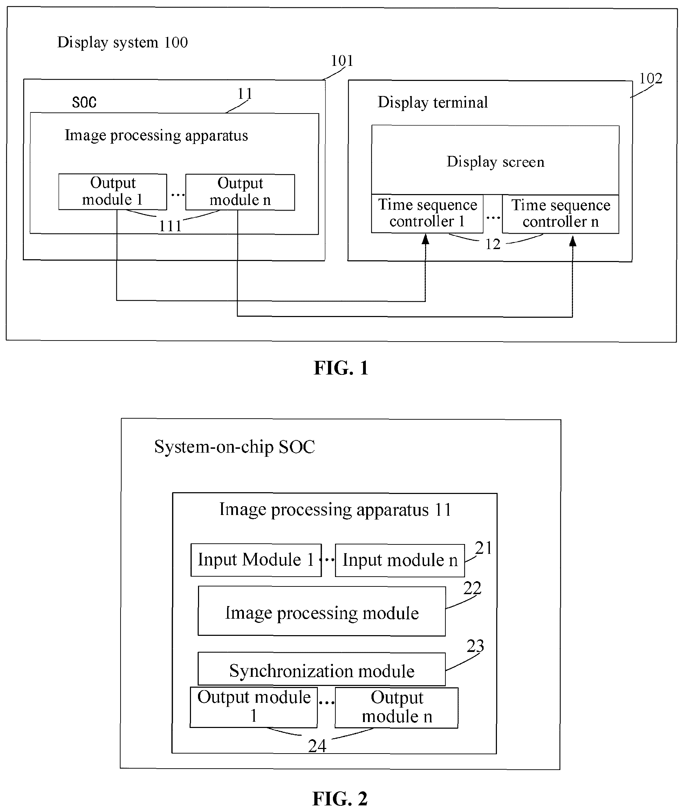

Fig. 1 shows a display system 100 suitable for an image processing method to which an embodiment of the present disclosure is applied.

As shown in Fig. 1, the display system 100 includes a system-on-chip SOC 101, and a display terminal 102. The SOC 101 includes an image processing apparatus 11. The image processing apparatus 11 configured for acquiring an image signal to be displayed on the display terminal 102, and processing the image signal to be displayed to obtain a plurality of sub-image signals to be displayed. A plurality of output modules 111 are configured for respectively sending the respective sub-image signals to be displayed to each time sequence controller 12 of the display terminal 102 on the basis of a plurality of synchronization signals, so that each time sequence controller 12 respectively drives different display sub-areas of the display terminal 102 to display respective sub-image signals to be displayed.

The quantity of the output modules 111 included in the image processing apparatus 11 is the same as the quantity of the time sequence controller 12 in the display terminal. For example, if the display terminal 102 drives the display screen by two time sequence controllers 12, the quantity of output modules 111 in the image processing apparatus 11 is also two. A data channel for data communication is established between each output module 111 and corresponding time sequence controller 12 for transmitting the respective sub-image signals to be displayed.

It should be noted that, in order to ensure that respective sub-image signals to be displayed can be simultaneously displayed in different display sub-areas of the display terminal 102, a plurality of clock generators with a homologous clock source can be used in the image processing apparatus 11 to respectively generate a synchronization signal for the display of each sub-image signal to be displayed, and send respective sub-image signals to be displayed to the display terminal 102 based on the respective synchronization signals. The time sequence controllers of the display terminal 102 respectively drive a corresponding display sub-area to synchronously display respective sub-image signals to be displayed according to the synchronization signal, so as to achieve the complete display of the image signal to be displayed via respective display sub-areas.

The quantity of output modules 111 and time sequence controllers 12 according to the embodiments of the present disclosure is merely exemplary, and more than two output modules 111 and time sequence controllers 12 are provided depending on actual needs.

### Exemplary apparatus

Fig. 2 is a schematic diagram of an image processing apparatus according to an exemplary embodiment of the present disclosure. As shown in Fig. 2, the image processing apparatus 11 is located in a SOC. The image processing apparatus 11 includes at least one input module 21, an image processing module 22, a synchronization module 23, and a plurality of output modules 24. The modules may be connected to each other by internal connection lines.

The input modules 21 is configured for acquiring an image signal to be displayed. The image processing module 22 is configured for determining the quantity of output modules 24, and determining respective sub-image signals to be displayed corresponding to the image signal to be displayed based on the quantity of output modules 24. The synchronization module 23 is configured for determining a synchronization signal corresponding to respective sub-image signals to be displayed. The plurality of output modules 24 are configured for respectively sending respective sub-image signals to be displayed to the display terminal based on the synchronization signal.

The input module 21, the image processing module 22, the synchronization module 23, and the output module 24 will be described in detail below.

The input module 21 is a functional module for acquiring an image signal to be displayed, and the input module 21 can read the image signal to be displayed from a memory (such as a memory or a cache of the SOC. The input module 21 can access a set memory address of the memory, and read an image signal to be displayed from the set memory address.

Herein, the input module 21 includes a data bus, such as a direct memory access bus (abbreviated to DMA), and acquires and reads an image signal to be displayed from a memory via the data bus. The input modules 21 includes a corresponding data bus, and acquires data from different storage spaces of the memory via the corresponding data bus. When it is required to acquire an image signal to be displayed, a Central Processing Unit (abbreviated to CPU) drives an input module 21 via computer instructions to acquire the image signal to be displayed in a memory via a corresponding data bus.

It may be understood that the image data in the memory (e.g., memory or cache) of the SOC is data transmitted to the SOC and stored in the memory of the SOC by various means, for example, the image data transmitted to and received from a camera by a mobile industry processor interface (abbreviated to MIPI), or the image data received from an external USB device via a universal serial bus (Universal Serial Bus, abbreviated as USB), or the image data obtained from a network via a wireless interface connected to a network server.

In an alternative embodiment, the quantity of input modules 21 is one or more. When the quantity of input modules is one, a complete image signal to be displayed is acquired via the one input module. When the quantity of input modules is multiple, a part of the image signals to be displayed in the image signals to be displayed is acquired by respective input modules, and the parts of the image signals to be displayed acquired by the plurality of input modules are combined into the image signals to be displayed in the present embodiment. Here, the image signal to be displayed is used to indicate a pixel value of an image to be displayed on the display screen. For example, the image signal to be displayed includes at least one of image information of an external environment of the vehicle acquired by a camera, video information to be played, navigation information during driving, and the like. When the quantity of input modules is plural, the image signals to be displayed acquired by respective input modules are used to achieve signals of different function types, or are used to achieve signals of the same function type.

In an alternative embodiment, after acquiring the image signal to be displayed, the input module 21 transmits the image signal to be displayed to the image processing module 22.

The image processing module 22 is configured for determining the quantity of output modules, and determining respective sub-image signals to be displayed corresponding to the image signal to be displayed on based on the quantity of output modules.

The image processing module 22 includes a Graphics Processing Unit (GPU), and a connection is established between the image processing module 22 and the input module 21 via a connecting wire. In the present disclosure, the quantity of graphics processors is one or more.

In embodiments of the disclosure, the image processing module 22 is also configured for processing image signals to be displayed, e.g., performing enhancement processing, brightness adjustment, etc. of the image signals to be displayed for improving image quality and display effect.

In the embodiments of the disclosure, the image processing module 22 is configured for determining the quantity of output modules 24, and for determining respective sub-image signals to be displayed corresponding to the image signal to be displayed based on the quantity of output modules 24. For example, when the quantity of input modules 21 does not equal to the quantity of output modules 24, the image processing module 22 may divide one or more image signals to be displayed acquired by a plurality of input modules 21 based on the quantity of output modules, so as to obtain respective sub-image signals to be displayed having the same quantity as that of output modules 24.

The synchronization module 23 is configured for determining a synchronization signal corresponding to respective sub-image signals to be displayed. Here, the synchronization signal is configured for ensuring time sequence matched with the display screen display of the display terminal, so as to avoid display errors or data loss.

In the present embodiment, the synchronization module 23 includes a plurality of clock generators with a homologous clock source to respectively generate the same synchronization signal for the display of different sub-image signals to be displayed, so that the sub-image signals to be displayed can be respectively and synchronously displayed on the display sub-areas at different positions of the display terminal.

Here, the synchronization signal includes a horizontal synchronization signal H-Sync and a vertical synchronization signal V-Sync. The vertical synchronization signal is used to ensure that the image frame is synchronized with the refresh rate of the display screen, and can be used to solve the problem of screen tearing. The horizontal synchronization signal is used to synchronize the beginning of each line of the display screen, ensuring that the image is displayed correctly and continuously from one side of the screen to the other, enabling the image to be drawn line by line on the display screen.

There are a plurality of output modules 24, which respectively send respective sub-image signals to be displayed to a display terminal based on the respective synchronization signals. Here, the quantity of output modules is the same as the quantity of sub-image signals to be displayed, and each output module respectively sends a path of sub-image signals to be displayed to a display terminal.

The output module 24 is an output interface for communication and data exchange with the display terminal, which performs data transmission and data control with the display terminal via a wired connection or a wireless connection. The wired connection includes a HDMI connection, a USB connection, an Ethernet connection, etc. The wireless connection includes a Bluetooth connection, a Wireless Fidelity (WIFI) connection, etc.

In the above-mentioned image processing apparatus according to an embodiment of the present disclosure, each of input modules is configured for acquiring an image signal to be displayed; the image processing module is configured for determining a quantity of output modules, and determining respective sub-image signals to be displayed corresponding to the image signal to be displayed based on the quantity of output modules; the synchronization module is configured for determining a synchronization signal corresponding to the respective sub-image signals to be displayed; and the plurality of output modules are configured for respectively sending the respective sub-image signals to be displayed to the display terminal based on the synchronization signal. Thus, the present disclosure can achieve the effect of displaying an image signal to be displayed via an ultra-wide display screen by dividing the image signals to be displayed and by respectively and synchronously displaying a plurality of sub-image signals to be displayed obtained by dividing in different display sub-areas of a display terminal via a plurality of synchronization signals. Moreover, the cost of the display terminal is reduced without adding any hardware.

On the basis of the above-mentioned embodiment shown in Fig. 2, in some alternative implementations, the image processing module 22 is configured for determining respective sub-image signals to be displayed corresponding to the image signal to be displayed based on the quantity of output modules. Here, the image processing module 22 determines the quantity of input modules 24; if the image processing module 22 determines that the quantity of the output modules 24 does not equal to the quantity of the input modules 21, the image signals to be displayed acquired by a plurality of the input modules 21 are divided based on the quantity of the output modules 24, to obtain sub-image signals to be displayed having the same quantity as the quantity of the output modules 24.

In some implementations, the quantity of input modules 21 is less than the quantity of output modules 24. For example, if the quantity of input modules 21 is one and the quantity of output modules24 is two, the image signals to be displayed acquired by the input modules 21 can be divided to obtain two sub-image signals to be displayed, which consist with the quantity of the output modules 24.

It should be noted that the image processing module 22 may divide the image signal to be displayed in the above-mentioned manner after performing pre-processing on the image signal to be processed, such as enhancement processing, brightness adjustment, etc. so as to help improve the efficiency of image pre-processing.

In the present embodiment, the image processing module 22 obtains sub-image signals to be displayed having the same quantity as the quantity of output modules 24 by dividing the image signal to be displayed acquired by a plurality of input modules 21, thereby achieving the transmission and display processing on the image signal to be processed through different data channels.

On the basis of the above-mentioned embodiment shown in Fig. 2, the image processing module 22 is further configured for determining the quantity of the input modules 21, and determining respective image signals to be displayed acquired by the respective input modules 21 as the sub-image signal to be displayed if it is determined that the quantity of the output modules 24 equals to the quantity of the input modules 21.

Preferably, when the quantity of input modules 21 equals to the quantity of output modules, a corresponding quantity of image processing modules 22 can be correspondingly set in the SOC. Each image processing module 22 respectively corresponds to a GPU, and the GPUs separately and simultaneously process image sub-signals to be displayed acquired by respective input modules 21, and the processed image sub-signals to be displayed are respectively sent to the display terminal via a corresponding output module 24. Alternatively, an image processing module 22 is provided in the SOC, and the image processing module 22 includes a plurality of GPUs. Each GPU separately and simultaneously processes an image sub-signal to be displayed acquired by respective input modules 21and the processed image sub-signals to be displayed are respectively sent to a display terminal via a corresponding output module 24.

For example, an input module 21 includes an input module 1 and an input module 2. An image processing module 22 includes an image processing module 1 and an image processing module 2, and an output module 24 includes an output module 1 and an output module 2. Thus, there are two image signal processing paths in a SOC, where one processing path is from input module 1 to image processing module 1 to output module 1. In this processing path, the image signal to be displayed acquired by the input module 1 can be processed by the image processing module 1 and is output to a display terminal via the output module 1. The other processing path is from input module 2 to the image processing module 2 and to the output module 2, and in this processing path, the image signal to be displayed acquired by the input module 2 can be processed by the image processing module 2 and is output to a display terminal via the output module 2.

In this implementation, by designing a plurality of processing paths in the SOC and separately and simultaneously processing the image signals to be displayed by the plurality of processing paths, it is possible to improve the image processing efficiency and improve the image rendering and display efficiency on the display terminal side.

On the basis of the above-mentioned embodiment shown in Fig. 2, in some alternative implementations, a plurality of output modules 24 are further configured for respectively sending respective sub-image signals to be displayed to the plurality of time sequence controllers of the display terminal based on the synchronization signal, so that the plurality of time sequence controllers simultaneously drive the display terminal to display sub-image signals to be displayed.

Here, the clock generator is a device for generating a synchronization signal, and is configured for driving the display terminal to display an image signal based on the synchronization signal.

On the basis of the above-mentioned embodiment shown in Fig. 2, in some alternative implementations, the synchronization module 23 includes a plurality of clock generators with a homologous clock source, where the quantity of the plurality of clock generators is the same as the quantity of the plurality of output modules. The synchronization module 23 is configured for generating by each of the clock generators a corresponding synchronization signal for respective sub-image signals to be displayed.

In the present implementation mode, the quantity of clock generators with the homologous clock source is the same as the quantity of output modules 24. A clock generator generates a corresponding synchronization signal for respective sub-image signals to be displayed, and each output module 24 can send the respective sub-image signals to be displayed to the display terminal via a corresponding data channel according to the synchronization signal, so as to achieve that display sub-areas at different positions of the display terminal respectively and synchronously display sub-image signals to be displayed.

In the present implementation mode, the same synchronization signal is respectively generated for different sub-image signals to be displayed by a clock generator based on a homologous clock source, and a plurality of output modules can respectively send respective sub-image signals to be displayed to a display terminal based on the synchronization signal generated by the homologous clock source, so as to achieve the display of sub-image signals to be displayed simultaneously in a display sub-area at different positions of the display terminal, achieving the effect of displaying a complete image signal to be displayed on an ultra-wide display screen.

### Exemplary apparatus

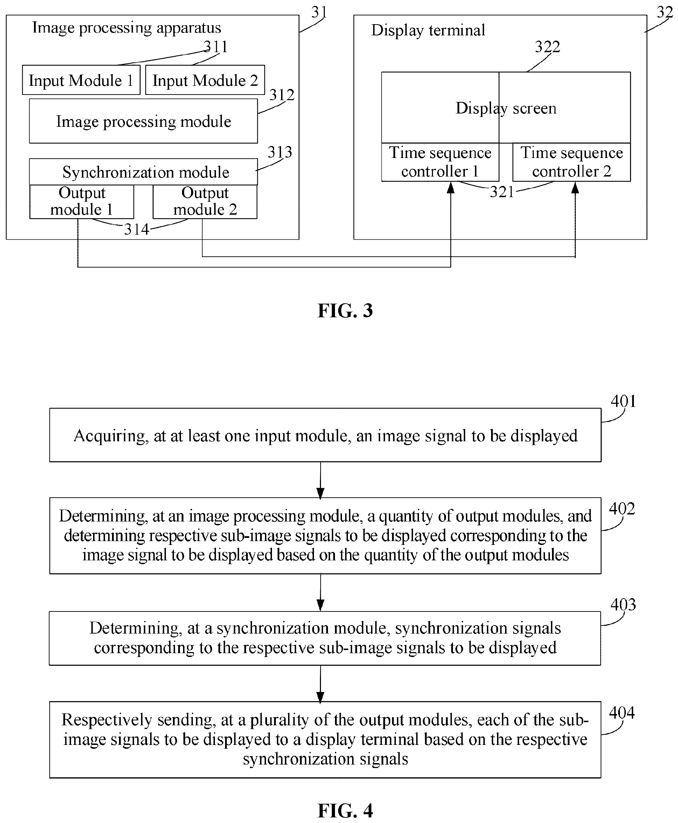

Fig. 3 is a structurally schematic view of a display apparatus according to an exemplary embodiment of the present disclosure. The display apparatus includes an image processing apparatus 31 and a display terminal 32, as shown in Fig. 3.

Herein, the image processing apparatus 31 is an apparatus in the above-mentioned embodiment shown in Fig. 2, and includes at least one input module 311 (the quantity of input modules is one, or is the same as the quantity of output modules 314, and Fig. 3 illustrates two input modules, namely, an input module 1 and an input module 2 respectively, but is not limited to two), an image processing module 312, a synchronization module 313, and a plurality of output modules 314 (the quantity of output modules is the same as the quantity of time sequence controllers of the display terminal 32, and Fig. 3 only illustrates two output modules, namely, an output module 1 and an output module 2 respectively, but is not limited to two). The display terminal 32 includes a plurality of time sequence controllers 321 (only two time sequence controllers are shown in Fig. 3, including a time sequence controller 1 and a time sequence controller 2 are shown respectively, but not limited to two) and a display screen 322.

Here, the quantity of time sequence controllers 321 is the same as the quantity of output modules 314. A time sequence controller 321 acquires a sub-image signal to be displayed from a corresponding output module 314, and respectively drives display sub-areas at different positions of a display screen 322 to display respective sub-image signals to be displayed.

As illustrated in Fig. 3, a data channel, such as a high definition multimedia interface (abbreviated to HDMI) channel, is established between output module 314 of the image processing apparatus 31 and the corresponding time sequence controller 321 of the display terminal 32. By the established data channel, the time sequence controller 321 can receive a sub-image signal to be displayed sent by a corresponding output module 314, and synchronously drive various display sub-areas on the display screen to display corresponding image data.

In particular implementation, the time sequence controller 321 may convert the received sub-image signal to be displayed into a low voltage differential signal, with the low voltage differential signal used for driving the display sub-area corresponding to the display screen to display the sub-image signal to be displayed.

Illustratively, the display terminal 32 can control a left display sub-area and a right display sub-area of the display screen to scan and display data by two time sequence controllers (a time sequence controller 1 and a time sequence controller 2), respectively. After receiving the sub-image signal to be displayed sent by the output module 1 via the data channel, the time sequence controller 1 can drive the left display sub-area of the display screen 322 to display according to the synchronization signal. After receiving the sub-image signal to be displayed sent by the output module 2 via the data channel, the time sequence controller 2 can drive the right display sub-area of the display screen 322 to display according to the synchronization signal, thereby achieving that the time sequence controller 1 and the time sequence controller 2 receiving the sub-image signal to be displayed respectively drive the display sub-areas at different positions of the display screen to display the received sub-image signal to be displayed.

It will be appreciated that the quantity of time sequence controllers 321 is determined by the width of the display screen 322 and the display width that can be supported by the time sequence controller 321, e.g., a display screen width of 12288 pixels and a display width of 4096 pixels that can be supported by the time sequence controller 321, and at least three time sequence controllers are required to support the display of the display screen.

Herein, the display sub-area driven by the time sequence controller is determined by the connection line between the time sequence controller and the display screen. The time sequence controller and the display screen are connected by using a network cable or a serial port cable.

When dividing an image signal to be displayed, the image processing apparatus 31 may divide the image signal to be displayed on the basis of the proportion of different display sub-areas of the display screen. For example, if the sizes of the display sub-areas respectively driven by two time sequence controllers are the same, the image signal to be displayed may be divided equally to obtain two sub-image signals to be displayed. If the sizes of the display sub-areas driven by the two time sequence controllers are different, and the time sequence controller 1 drives a display sub-area at the left side 3/4 of the display screen, and the time sequence controller 2 drives a display sub-area at the right side 1/4 of the display screen, the image signal to be displayed can be divided into two left and right sub-image signals to be displayed with a size ratio of 3 : 1 according to this ratio.

Preferably, in the embodiments of the present disclosure, the size of the display sub-areas driven by the time sequence controller is generally the same. Therefore, when the quantity of input modules is less than the quantity of output modules, the image signals to be displayed acquired by respective input modules can be equally divided to obtain a corresponding plurality of sub-image signals to be displayed with the same size.

It should be noted that the various modules of the present apparatus are capable of being disassembled and/or reassembled, and such disassembly and/or reassembly should be considered as equivalents of the present apparatus.

The image processing apparatus in the exemplary embodiment of the present apparatus corresponds to the above-described exemplary image processing apparatus, and the relevant contents may be referred to or referred to each other. Advantageous effects corresponding to exemplary embodiments of the present apparatus are described with reference to the corresponding advantageous technical effects of the exemplary image processing apparatus described above, and will not be described in detail herein.

### Exemplary method

Fig. 4 is a schematic flow diagram of an image processing method according to another exemplary embodiment of the present disclosure, which is applied to an image processing apparatus in a SOC of a display device, as shown in Fig. 4, and includes the steps below.

Step 401, acquiring an image signal to be displayed by at least one input module.

In this embodiment, each of input modules can read the image signal to be displayed from the memory of the SOC.

In a specific implementation, when there are a plurality of input modules, corresponding address parameters can be respectively configured for each of input modules in advance, including a memory address and a storage space size, and each of input modules can read an image signal to be displayed from the memory according to the address parameters.

Step 402, determining a quantity of output modules by an image processing module, and determining respective sub-image signals to be displayed corresponding to the image signal to be displayed based on the quantity of the output modules.

In this embodiment, the quantity of output modules of display device is pre-configured, the quantity of the output modules equals to the quantity of sub-image signals to be displayed and the quantity of display sub-areas on the display terminal side, with the sub-image signals to be displayed output by each output module being respectively displayed on the display sub-areas at different positions of the display terminal.

In the present embodiment, the quantity of sub-image signals to be displayed is the same as the quantity of output modules. After the quantity of output modules is determined, the image signal to be displayed can be divided into sub-image signals to be displayed. where the quantity of the sub-image signals to be displayed is inconsistent with the quantity of output modules.

Step 403, determining by a synchronization module a synchronization signal corresponding to the respective sub-image signals to be displayed.

In the present embodiment, the synchronization signal of the sub-image signal to be displayed may be generated by a clock generator with a homologous clock source, and the synchronization signals corresponding to respective sub-image signals to be displayed are the same, which helps to ensure that the display of each sub-image signal to be displayed is synchronized.

Step 404, sending, by a plurality of the output modules, the sub-image signals to be displayed to a display terminal based on the synchronization signal respectively.

In this embodiment, based on the synchronization signal, respective sub-image signals to be displayed can be respectively sent to the corresponding time sequence controller of the display terminal by the output module. The output module transmits a corresponding sub-image signal to be displayed to the time sequence controller by a data channel with a corresponding one of the time sequence controllers.

The above-mentioned embodiments of the present disclosure provide a method for generating the same synchronization signal by using the clock generator with a homologous clock source, and respectively and synchronously sending each sub-image signal to be displayed to a display terminal according to the same synchronization signal, so that a plurality of time sequence controllers on the display terminal side can respectively drive display sub-areas at different positions of a display screen, thereby being able to achieve the effect of extending the width of a display screen.

In some alternative implementations, the process of the image processing module determining respective sub-image signals to be displayed corresponding to the image signal to be displayed based on the quantity of the output modules includes: determining the quantity of input modules; and dividing the image signals to be displayed acquired by a plurality of input modules based on the quantity of the output modules to obtain sub-image signals to be displayed having the same quantity as the quantity of the output modules if it is determined that the quantity of the output modules does not equal to the quantity of the input modules.

In this implementation mode, the quantity of input modules is less than the quantity of output modules. For example, if the quantity of input modules is 1 and the quantity of output modules is 2, the image signals to be displayed acquired by the input modules can be divided to obtain two sub-image signals to be displayed.

In the present implementation mode, by dividing the image signals to be displayed acquired by a plurality of input modules, various sub-image signals to be displayed having the same quantity as the quantity of output modules are obtained, thereby achieving the transmission and display processing of the image signals to be processed by different data channels.

In other alternative implementations, the process of the image processing module determining respective sub-image signals to be displayed corresponding to the image signal to be displayed based on the quantity of output modules includes: determining the quantity of input modules; and determining the image signal to be displayed acquired by the respective input modules respectively as the sub-image signal to be displayed if it is determined that the quantity of the output modules equals to the quantity of the input modules.

In a specific implementation, when the quantity of input modules equals to the quantity of output modules, a corresponding quantity of image processing modules can be correspondingly set in the SOC, and the image processing module processes an image sub-signal to be displayed acquired by respective input modules at the same time. The processed image sub-signal to be displayed is respectively sent to a display terminal by a corresponding output module.

In this implementation, by designing a plurality of processing paths in the SOC and processing the image signals to be displayed by the plurality of processing paths at the same time, it is possible to improve the image processing efficiency and improve the image rendering and display efficiency on the display terminal side.

In some alternative implementations, the process of a plurality of output modules respectively sending respective sub-image signals to be displayed to a display terminal based on a synchronization signal includes sending, based on the synchronization signal, the respective sub-image signals to be displayed to a plurality of time sequence controllers of the display terminal, respectively, so that the display terminal is driven simultaneously by the plurality of time sequence controllers to display the respective sub-image signals.

In generating a synchronization signal, the synchronization module can respectively generate a corresponding synchronization signal for each sub-image signal to be displayed by each clock generator based on a homologous clock source. Thus, the output module can respectively send the sub-image signal to be displayed to the display terminal via a corresponding data channel according to the synchronization signal, so as to achieve that respective sub-image signals to be displayed are displayed on display sub-areas at different positions of the display terminal respectively and synchronously.

It will be appreciated that the exemplary embodiment of the method corresponds to the image processing apparatus in the embodiment of Fig. 2, and that the relevant contents may be referred to each other and referred to each other. Advantageous effects corresponding to exemplary embodiments of the present method are described with reference to the corresponding advantageous technical effects of the exemplary image processing apparatus described above, and will not be described in detail herein.

### Exemplary electronic device

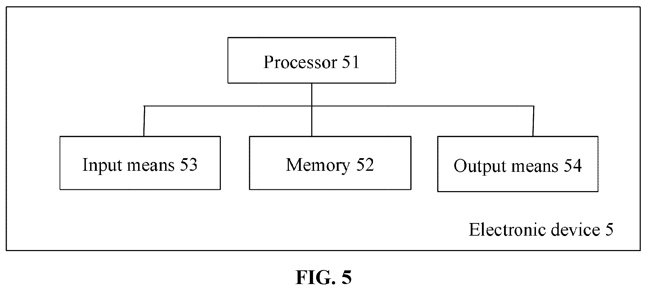

Fig. 5 is a structure diagram of an electronic device including at least one processor 51 and memory 52 according to an embodiment of the present disclosure.

The processor 51 is a central processing unit (CPU) or other form of processing unit having data processing capabilities and/or instruction execution capabilities, and used for controlling other components in the electronic device 5 to perform desired functions.

The memory 52 includes one or more computer program products in various forms of computer-readable storage media, such as a volatile memory and/or a non-volatile memory. The volatile memory includes a random access memory (RAM) and/or a cache storage (cache) etc. The non-volatile memory includes a read-only memory (ROM), a hard disk, a flash memory, etc. One or more computer program instructions are stored on the computer-readable storage medium, and the processor 51 executes the stored one or more computer program instructions to implement the image processing method and/or other desired functions of the various embodiments of the present disclosure as described above.

In one example, the electronic device further includes an input means 53 and an output means 54. These components are interconnected by a bus system and/or other form of connection mechanism (not shown).

**The** input means 53 also includes, for example, a keyboard, a mouse, a touch screen, a sound pickup device (e.g., a microphone array), and the like.

The output means 54 outputs various information to the outside, including, for example, a display, a speaker, a printer, and a communication network and a remote output device to which it is connected, etc.

**Of** course, for simplicity, only some of the components of the electronic device relevant to the present disclosure are shown in Fig. 5, omitting components such as buses, input/output interfaces, etc. In addition, the electronic device may include any other suitable components, depending on the particular application.

### Exemplary computer-readable storage medium

In addition to the methods and apparatus described above, embodiments of the present disclosure also include a computer-readable storage medium having stored thereon computer program instructions which, when executed by a processor, cause the processor to perform steps of the image processing method according to various embodiments of the present disclosure as described in the "Exemplary Methods" section of the present description above.

The computer-readable storage medium takes any combination of one or more readable media. The readable medium means a readable signal medium or a readable storage medium. The readable storage medium includes, but not limited to, an electronic, magnetic, optical, electromagnetic, infrared, or semiconductor system, an apparatus, or a device, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

While the general principles of the present disclosure have been described above in connection with specific embodiments, it should be understood that the advantages, superiority, effects, and the like set forth in the present disclosure are merely exemplary and not limiting, and are not to be construed as required by the various embodiments of the present disclosure. Furthermore, the specific details disclosed above are for purposes of illustration and understanding only and are not intended to be limiting. The above details do not limit the use of the above specific details for the implementation of this disclosure

Various modifications and alterations of this disclosure may be made by those skilled in the art without departing from the spirit and scope of this application. Thus, it is intended that the present invention cover the modifications and variations of this application provided they come fall in the scope of the appended claims and their equivalents.

## Claims

1. An image processing apparatus (11, 31), comprising:
at least one input module (21), configured for acquiring an image signal to be displayed;
an image processing module (22), configured for determining a quantity of output modules, and determining respective sub-image signals to be displayed corresponding to the image signal to be displayed based on the quantity of the output modules;
a synchronization module (23), configured for determining synchronization signals corresponding to the respective sub-image signals to be displayed; and
a plurality of output modules (24), configured for respectively sending each of the sub-image signals to be displayed to a display terminal (32) based on the respective synchronization signals.

2. The apparatus according to claim 1, wherein the image processing module (22) is further configured for:
determining the quantity of the input modules (21); and
dividing the image signals to be displayed acquired by the at least one input module (21) based on the quantity of the output modules (24) to obtain sub-image signals to be displayed having the same quantity as the quantity of the output modules (24) if it is determined that the quantity of the output modules (24) does not equal to the quantity of the input modules (21).

3. The apparatus according to claim 1, wherein the image processing module (22) is further configured for:
determining the quantity of the input modules (21); and
determining the image signal to be displayed acquired by the respective input modules (21) respectively as the sub-image signal to be displayed if it is determined that the quantity of the output modules (24) equals to the quantity of the input modules (21).

4. The apparatus according to claim 1, wherein the plurality of output modules (24) are further configured for:
sending, based on the synchronization signal, the respective sub-image signals to be displayed to a plurality of time sequence controllers (321) of the display terminal (32), respectively, so that the display terminal (32) is driven simultaneously by the plurality of time sequence controllers (321) to display the respective sub-image signals.

5. The apparatus according to any one of claims 1-4, wherein the synchronization module (23) comprises a plurality of clock generators based on a homologous clock source, the quantity of the plurality of clock generators being the same as the quantity of the plurality of output modules (24); and
wherein the synchronization module (23) is further configured for:
generating by each of the clock generators a corresponding synchronization signal for respective sub-image signals to be displayed.

6. A display apparatus, comprising a display terminal (32) and the image processing apparatus (31) according to any one of claims 1-5;
wherein the display terminal (32) comprises a plurality of time sequence controllers (321) and a display screen (322), and the quantity of the time sequence controllers (321) is the same as the quantity of output modules (24) in the image processing apparatus (11,31); and
wherein each of the time sequence controllers (321) of the display terminal (32) is configured for acquiring a sub-image signal to be displayed, and for driving the display screen (322) to display the sub-image signal to be displayed.

7. The display apparatus according to claim 6, wherein each of the time sequence controllers (321) is configured for driving display sub-areas at different positions of the display screen (322) to display the respective sub-image signals to be displayed, respectively.

8. The display apparatus according to claim 7, wherein each of the time sequence controllers (321) is further configured for converting the received sub-image signal to be displayed into a low voltage differential signal so as to drive the display sub-areas.

9. An image processing method, comprising:
acquiring (401), at at least one input module, an image signal to be displayed;
determining (402), at an image processing module, a quantity of output modules, and determining respective sub-image signals to be displayed corresponding to the image signal to be displayed based on the quantity of the output modules;
determining (403), at a synchronization module, synchronization signals corresponding to the respective sub-image signals to be displayed; and
respectively sending (404), at a plurality of the output modules, each of the sub-image signals to be displayed to a display terminal based on the respective synchronization signals.

10. The image processing method according to claim 9, wherein the image processing module is further configured for:
determining the quantity of the input modules; and
dividing the image signals to be displayed acquired by the at least one input module based on the quantity of the output modules to obtain sub-image signals to be displayed having the same quantity as the quantity of the output modules if it is determined that the quantity of the output modules does not equal to the quantity of the input modules.

11. The image processing method according to claim 9, wherein the image processing module is further configured for:
determining the quantity of the input modules; and
determining the image signal to be displayed acquired by the respective input modules respectively as the sub-image signal to be displayed if it is determined that the quantity of the output modules equals to the quantity of the input modules.

12. The apparatus according to claim 9, wherein the plurality of output modules are further configured for:
sending, based on the synchronization signal, the respective sub-image signals to be displayed to a plurality of time sequence controllers of the display terminal, respectively, so that the display terminal is driven simultaneously by the plurality of time sequence controllers to display the respective sub-image signals.

13. The image processing method according to any one of claims 9-12, wherein the synchronization module comprises a plurality of clock generators based on a homologous clock source, the quantity of the plurality of clock generators being the same as the quantity of the plurality of output modules; and
wherein the synchronization module is further configured for:
generating by each of the clock generators a corresponding synchronization signal for respective sub-image signals to be displayed.

14. A computer-readable storage medium, storing a computer program thereon, which, when executed by a processor, cause the processor for to performing the method according to any one of claims 9-13.

15. An electronic device, comprising:
a processor (51); and
a memory (52) configured for storing processor-executable instructions;
wherein the processor (51) is configured for read the executable instructions from the memory (52) and to execute the instructions to implement the method according to any one of claims 9-13.
